# EUROPEAN PATENT APPLICATION

(11) **EP 4 764 691 A1**
(43) Date of publication of application: **24.06.2026**
(21) Application number: 25226586.3
(22) Date of filing: 22.12.2025
(51) Int. Cl.: G03B 15/05, F21V 7/00, H04N 23/56

(54) **ILLUMINATION REFLECTOR SYSTEM AND METHOD**

(30) Priority: 23.12.2024 US 202463737850 P
(71) Applicant: MacDonald, Dettwiler and Associates Inc., Brampton, Ontario L6Y 6K7 (CA)
(72) Inventor: PRIEST, David, L6Y 6K7 Brampton (CA); YOUSSEF, Ibrahim Ahmad, L6Y 6K7 Brampton (CA); HAAS, Joel Patrick George, L6Y 6K7 Brampton (CA); FULFORD, Jacob, L6Y 6K7 Brampton (CA)
(74) Representative: Mewburn Ellis LLP

(57) **Abstract**

Provided is an illumination system and reflector device. The illumination system includes an illumination reflector that reflects light into a field-of-view (FOV) of a camera system. The illumination reflector directs source illumination, that would otherwise be lost, into the FOV of the camera system. The illumination reflector may include two stages that are asymmetrical.

## Description

### Technical Field

The following relates generally to imaging systems, and more particularly to illumination reflector systems and methods.

### Introduction

Conventional reflectors may be symmetrical because most light sources are symmetrical. The field-of-view (FOV) of conventional imaging systems be symmetrical or very close to symmetrical. For example, a 4:3 aspect ratio being very common. A symmetrical illumination pattern could be used to overfill a nearly symmetrical FOV without too much loss.

More recently, wide screen aspect ratios (e.g., 16:9) are becoming common. Now that more asymmetrical aspect ratios are becoming common, asymmetrical illumination patterns may need to be designed to efficiently fill them.

Conventional systems may be inadequate to meet the illumination needs of an asymmetrical FOV where Illumination is optimized to matching its illuminated area to the FOV of the corresponding imaging system. Modern imaging systems may need to produce asymmetrical, high definition images to fill widescreen display systems.

Accordingly, there is a need for an improved illumination reflector system and method that overcomes at least some of the disadvantages of existing systems and methods.

### Summary

Provided is an illumination system and reflector device. The illumination system includes an illumination reflector that reflects light into a field-of-view (FOV) of a camera system. The illumination reflector directs source illumination, that would otherwise be lost, into the FOV of the camera system. The illumination reflector may include two stages that are asymmetrical.

Provided is an illumination system. The system includes an illumination reflector that reflects light into a field-of-view (FOV) of a camera system. The system includes a light source that emits light. The system includes an illumination reflector directs source illumination into the FOV of the camera system. The illumination reflector includes a first stage and a second stage. The first stage and the second stage reflect the light to produce an asymmetrical illumination.

The system may further include a first light source that emits a first light, and a second light source that emits a second light.

The first light source and the second light source may be symmetrical.

The illumination reflector may include the first stage reflector for reflecting the first light. The illumination reflector may include a further first stage reflector for reflecting the second light.

The first stage reflectors may reflect the widest angles emitted from the first and second light sources to deliver a bright central peak within the FOV.

The first stage reflectors may have steep cone angles that have the light sources positioned close together.

The light sources may include any one or more of a light emitting diode (LED), a light pipe, a fiber light, an arc lamp, an incandescent filament, and a Lambertian source of light.

The first stage and the second stage may include a rectangular cone with different angles along each axis.

The light source may be split in an optical path leading into the illuminator reflector.

The second stage reflector may be a single reflector that optimizes illumination uniformity and redirects source illumination that is outside the FOV towards the edges of the FOV.

The FOV of the camera system may have an asymmetrical, widescreen aspect ratio.

The illumination reflector may adjustably alter the angle of reflection of the first stage and/or the second stage.

The illumination reflector may adjustably alter the angle of reflection based on a trade-off between peak illuminance and uniformity.

The illumination reflector may have a coating to improve illumination. The coating may include a mirrored coating, a painted-on coating, or a white coating.

The illumination system may be mounted to a space station on or orbiting the Moon, the Earth, or another celestial body.

The system may further include a heater that provides heat to the light sources.

The system may further include a heater an electrical system. The electrical system may include a circuit card assembly that connects to and provides power to the light sources.

The circuit card assembly may include a bi-directional transient-voltage-suppression (TVS) diode to protect downstream components from potential electrostatic discharge strikes.

The system may further include the camera system that captures an image of an object.

The system may further include first and second illumination reflectors on opposite sides of the camera system. The first and second illumination reflectors may reflect light onto the object. The light may reflect off of the object and the image of the object may be captured by the camera system.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a conventional illumination system;
Figure 2 is a graph of angular distribution for the conventional illumination system;
Figure 3 is an example image of illuminance on a target of the conventional illumination system;
Figures 4A and 4B are perspective and side views of a block diagram of an illumination system, in accordance with an embodiment;
Figures 5A and 5B are perspective views of a block diagram of an illumination system having a single light source, in accordance with an embodiment;
Figure 6 is an illumination system, in accordance with an embodiment;
Figure 7 is a graph of angular distribution for the illumination system of Figure 6;
Figures 8 to 11 illustrate example images of illuminance on a target, respectively for, the conventional system of Figure 1, the illumination system of Figures 5A and 5B, and the illumination system of Figures 4A and 4B;
Figures 12A, 12B, and 12C are exploded, perspective and section views, respectively, of an illumination system, in accordance with an embodiment;
Figures 13A and 13B are front perspective, back perspective, top, and side views, respectively of a reflector of the illumination reflector of Figures 12A, 12B, and 12C;
Figure 14 is a block diagram of an electrical system for an illumination reflector, in accordance with an embodiment; and
Figure 15 is a block diagram of an illumination system, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

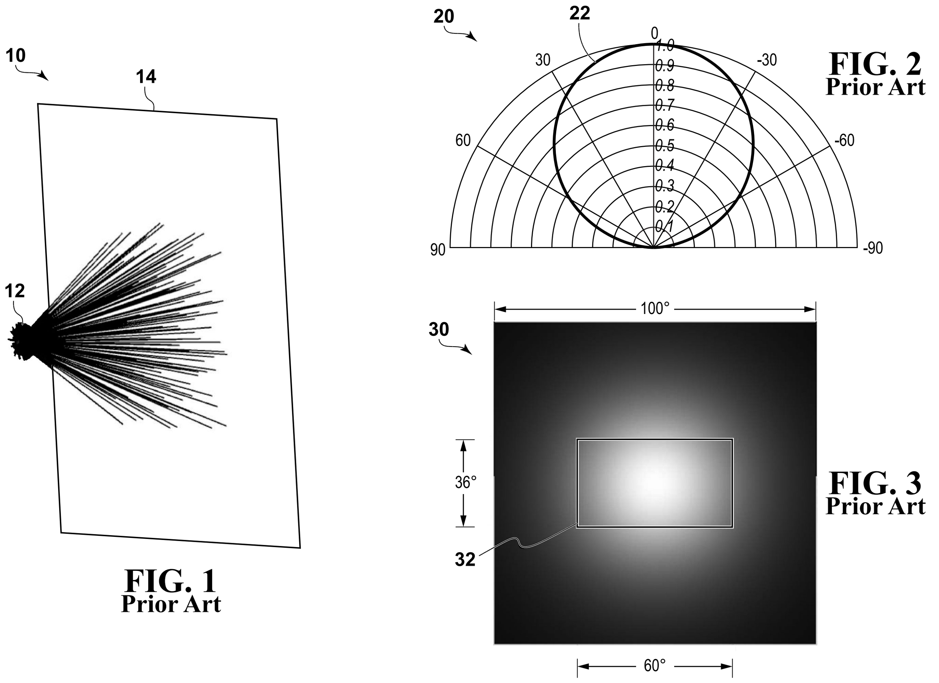

Referring to Figure 1, described therein is a conventional illumination system 10. The conventional illumination system 10 includes a light source 12 that illuminates a camera field of view (FOV) 14. The light source 12 is a single illumination source. The light source 12 may be, for example, a light emitting diode (LED), a light pipe, or a fiber light. In certain cases, the light source 12 is an arc lamp or an incandescent filament. The light source 12 may be a Lambertian source of light (typical LED).

In the conventional illumination system 10, emission is symmetrical and highly divergent. The light source 12 emits radiation over a large angular distribution. The light source 12 emits light wider than the corresponding camera FOV 14.

The camera FOV 14 may be a wide angle camera FOV between 110° and 60°. The camera FOV 14 may have a 16:9 aspect ratio camera FOV of 60° x 36°.

Figure 2 illustrates a graph 20 of an angular distribution of source for a conventional light source (e.g., light source 12). The graph 20 includes a symmetrical illumination pattern 22 that is symmetrical about the camera FOV 14.

Figure 3 illustrates an example image 30 of illuminance on a target 32 with the conventional illumination system 10. The image 30 shows an optical simulation showing illumination distribution on a target plane. The target plane is 100° x 100°. The target 32 is 60° x 36° camera FOV. In this example, only 16% of illumination emitted from the light source 12 is in the camera FOV 14. The image 30 is auto-scaled to use full dynamic range.

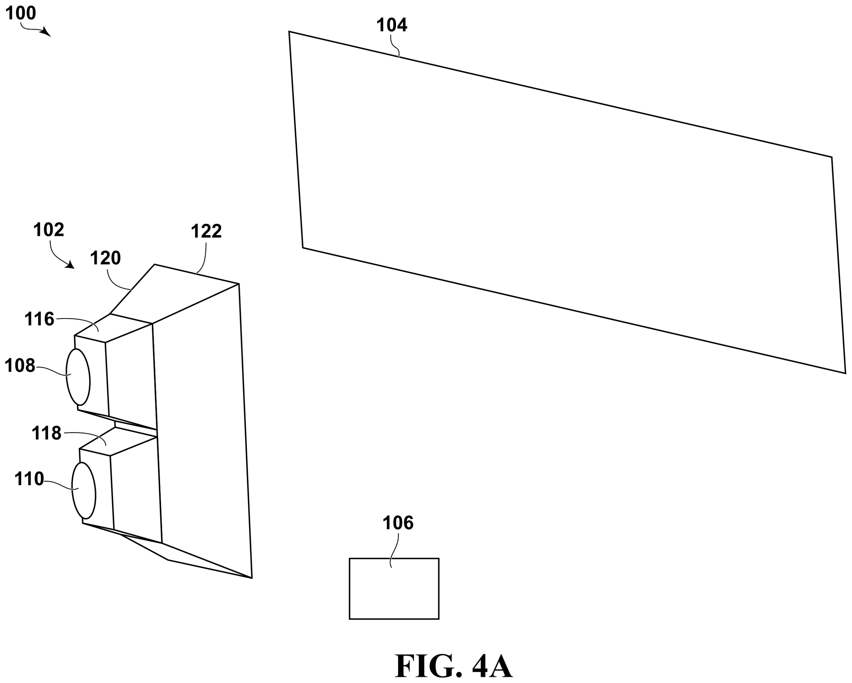

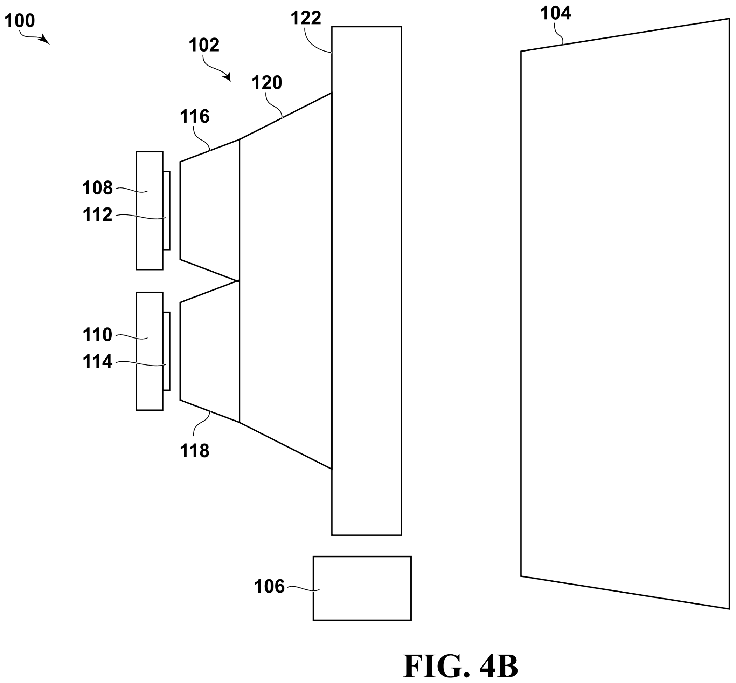

Referring to Figures 4A and 4B, illustrated therein is an illumination system 100, in accordance with an embodiment. The illumination system 100 includes an illumination reflector 102 that reflects light into a field-of-view (FOV) 104 of a camera system 106.

The illumination reflector 102 is an opto-mechanical part with specific optical surfaces. The illumination reflector 102 directs source illumination, that would otherwise be lost, into the FOV 104 of the camera system 106. The illumination reflector 102 may optimize the distribution of the illumination power and brightness that is delivered to the FOV 104 given the electrical power and physical space that has been allotted for the illumination system 100.

The illumination system 100 has multiple sources of light. The illumination system 100 has multiple symmetrical sources of light. The illumination system 100 includes a first light source 108 that emits a first light. The illumination system 100 includes a second light source 110 that emits a second light. The first light source 108 includes a first light emitting diode (LED) 112. The second light source 110 includes a second LED 114.

The multiple sources of light 108, 110 arrive at the reflector 102. The light sources 108, 110 may include any one or more of a light emitting diode (LED), a light pipe, or a fiber light. In certain cases, the light sources 108, 110 may be an arc lamp or an incandescent filament. The light sources 108, 110 may be a Lambertian source of light (such as a typical LED).

The light sources 108 may emit over an angular distribution that is wider than the desired FOV. The reflector 102 may not be necessary with light sources having narrow angular distribution.

The light sources 108, 100 may include a single source that is split in the optical path leading into the asymmetric reflector 102. The splitting of the light may be prism- or fiber-based.

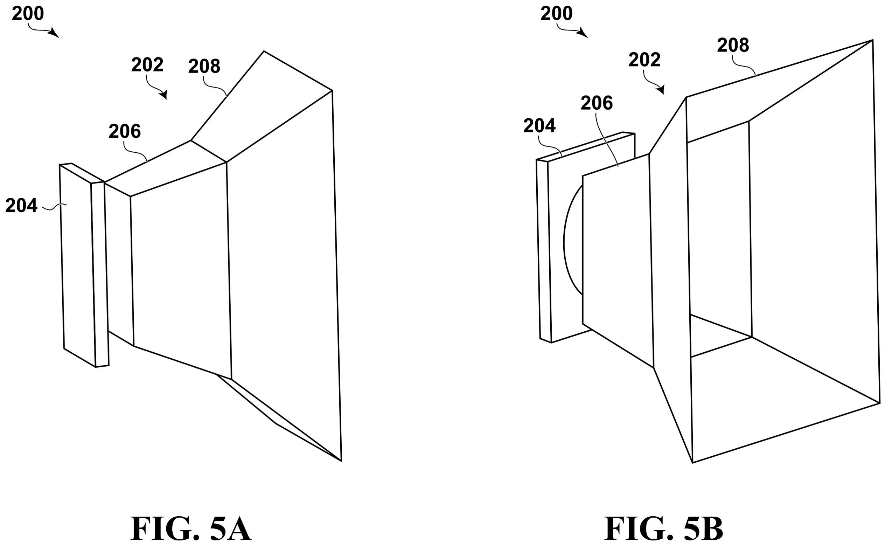

Referring now to Figures 5A and 5B, illustrated therein is an illumination system 200, in accordance with an embodiment. The illumination system 200 includes an illumination reflector 202 that reflects light from a single light source 204 into a camera field-of-view (FOV). The illumination reflector 202 includes a first stage 206 and a second stage 208, as described herein. The reflector 202 reflects light that would be outside camera FOV into the camera FOV.

Referring again to Figures 4A and 4B, the illumination system 100 includes the multiple light sources 108, 110, that may further increase illumination intensity, power, and/or brightness as compared to the illumination system 200 of Figures 5A and 5B which has one light source 204.

The illumination system 100 may have a constant amount of electrical power, with the multiple light sources 108, 110 driven at less current generates more light than single source driven at more current. Adding more light sources 108, 110 adds size to the illumination system 100. To reduce the size of the second stage 120, the reflector is shared by the multiple light sources 108, 110.

The illumination reflector 102 includes two stages: first stages 116, 118 and a second stage 120. The first stage 116, 118 of the reflector may be asymmetrical. The second stage 120 the reflector may be asymmetrical.

The first stages 116, 118, and the second stage 120 include a rectangular cone with different angles along each axis. The first stages 116, 118, and the second stage 120 reflect the first and second light to produce an asymmetrical illumination. The asymmetrical illumination may fill FOV 104 that is asymmetrical.

The illumination reflector 102 includes the first stage reflector 116 for reflecting the first light. The illumination reflector 102 includes the further first stage reflector 118 for reflecting the second light. The first stage includes individual reflectors 116, 118 for each light source 108. 110. The first stage reflectors 116, 118 reflect the widest angles emitted from each light source 108, 110 to deliver a bright central peak within the FOV 104. The first stage reflectors 116, 118 have steep cone angles. The steep cone angles may provide the light sources 108, 110 to be positioned close together. Consequently, the illumination reflector 102 is compact.

The illumination reflector 102 includes the second stage reflector 120 for reflecting the first light and the second light. The second stage reflector 120 is a single reflector that optimizes illumination uniformity. The second stage reflector 120 is positioned over the first stage reflectors 116, 118. The second stage reflector 120 redirects the remaining source illumination that is outside the FOV 104 towards the edges of the FOV 104.

The illumination reflector 102 includes a cover 122 for covering the second stage reflector 120. The cover 122 may be a transparent piece of glass.

The illumination reflector 102 is a solution to the technical problem involved with creating the illumination system 100 having intensity and uniformity within the FOV 104 of the corresponding camera system 106. The FOV 104 of the camera system 106 may have an asymmetrical, widescreen aspect ratio.

The camera system 106 is shown schematically in Figure 4A and 4B. The camera system may share a centerline (optic axis) with the illumination system 102. The relationship of a frustum of the camera system 106 to the FOV 104 may not be coaxial. The working distance from the light source 108, 110 to the target FOV 104 may be very large compared to the offset of illumination and imaging, such that illumination and imaging are generally coaxial.

The illumination reflector 102 may adjustably alter the angle of reflection for the first stage 116, 118. The illumination reflector 102 may adjustably alter the angle of reflection for the second stage 120. The illumination reflector 102 may adjust the angles and size of each stage 116, 118, 120, of the reflectors to redistribute the illuminance within FOV 104 of the camera 106.

The illumination reflector 102 may adjustably alter the angle of reflection based on a trade-off between peak illuminance and uniformity. Higher peak may provide less uniformity. Lower peak may provide increased uniformity.

The illumination reflector 102 may have a coating for improving illumination. The coating may include a mirrored coating, a painted-on coating, or a white coating.

While the illumination system 100 can be made brighter by adding more electrical power and/or adding more sources, there may be limitations on the amount of electrical power and physical space the illumination system 100 can use. There may be a practical limit to the amount of light that could be generated within these constraints. Without reflectors, illumination sources like LEDs may illuminate over a very wide, symmetrical area that is larger than the required FOV of the camera system resulting in a large portion of the illumination being lost with the larges effect along the shorter dimension of an asymmetrical FOV. Further, not only is using electrical power a constraint, waste energy from dissipated power may also be desirable to be managed via radiative surfaces on the imaging system 106. Wasted illumination may result in additional wasted energy that may also be rejected into the environment with no benefit.

The illumination reflector 102 creates an optimal illumination system as the light lost outside the FOV 104 in an unreflected case is redirected into the FOV 104. The reflected light is integrated appropriately with the illumination that was projected directly into the FOV 104. The resulting illumination distribution may meet brightness and uniformity needs.

The illumination reflector 102 is an improvement on existing technology. The illumination reflector 102 allows the illumination system 100 to deliver the peak intensity and uniformity within the FOV 104 given the constraints on available electrical power and physical space.

The illumination system 100 may be deployed in situations that need a compact source that can produce a bright, uniform, asymmetrical illumination field.

The illumination system 100 may be mounted to a space station orbiting the moon or on the moon. In this environment, self shadowing may be a more common scenario where artificial illumination will be desirable. Eclipse situations may be relatively uncommon in near rectilinear halo orbits. In this environment, periodic eclipses of the sun by the moon will reduce natural light. The illumination system 100 may provide imagery in this extreme environment. The illumination system 100 may be mounted on the end of a robotic arm.

The illumination system 100 may be used in terrestrial applications. While certain aspects of the illumination system 100 may be particularly useful in space applications, the illumination system 100 may be used both terrestrially and in space.

The illumination system 100 may be deployed for inspection, situational awareness and/or machine vision systems. The illumination system 100 may be deployed in inspection, situational awareness and/or machine vision systems in space robotic systems.

Inspection and situational awareness cameras share the same specifications and capture images and video in colour. A machine vision camera is a greyscale camera and shares the same specification with other variants. The illumination system 100 may have a red light for machine vision. The illumination system 100 may have a white light for non-machine vision cameras.

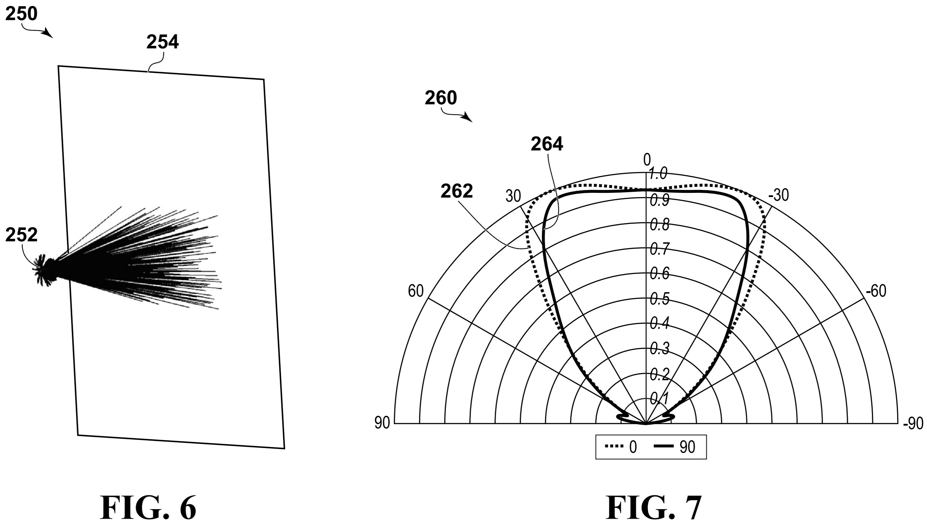

Referring to Figure 6, described therein is an illumination system 250, in accordance with an embodiment. The illumination system 250 includes a light source 252 that illuminates a camera field of view (FOV) 254. The light source 252 is a single illumination source as described with reference to Figures 5A and 5B.

Figure 7 illustrates a graph 260 of an angular distribution of source for a light source (e.g., light source 252). The graph 260 shows the effect of the illumination reflector 202, as compared to the graph 20 of Figure 2, where the symmetrical distribution of Figure 2 is now asymmetrical in Figure 7.

The graph 260 includes an asymmetrical illumination pattern at 0 degrees 262, and an illumination pattern at 90 degrees 264. The illumination patterns are asymmetrical about the camera FOV 14.

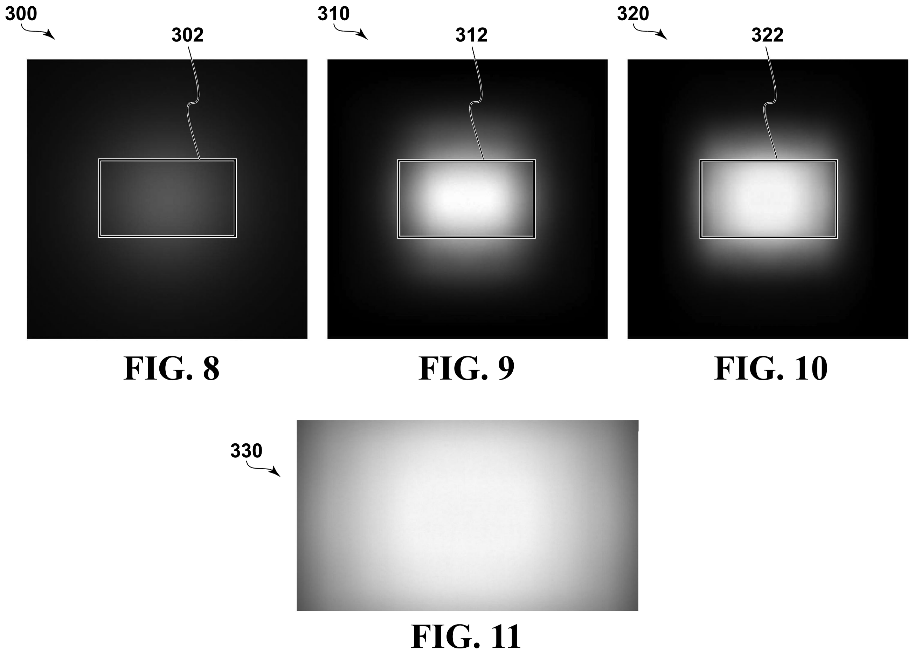

Referring now to Figures 8 to 11, illustrated therein are example images 300, 310, 320, 330 of illuminance on a target. The images 300, 310, 320, 330 have the same scaling and show the full dynamic range of reflector case.

Figure 8 illustrates the image 300 of a conventional illumination system where there is no reflector (e.g., system 10 of Figure 1). There is 16% of emitted light in a camera FOV 302.

Figure 9 illustrates the image 310 of an illumination system having a single light source and an asymmetrical reflector (e.g., system 200 of Figures 5A and 5B). There is 36% of emitted light in camera FOV 312.

Figure 10 illustrates the image 320 of an illumination system having two light source and an asymmetrical reflector (e.g., system 100 of Figures 4A and 4B). There is 39% of emitted light in camera FOV 322. Peak illuminance within the camera FOV 322 increased by 130% as compared to the camera FOV 302 of image 300 of the conventional system. Percentage of emitted illumination increased from 16% to 39% for the camera FOV 322 as compared to the camera FOV 302 of image 300 of the conventional system.

Figure 11 is an image 330 showing the illuminance distribution within a 16:9 camera FOV.

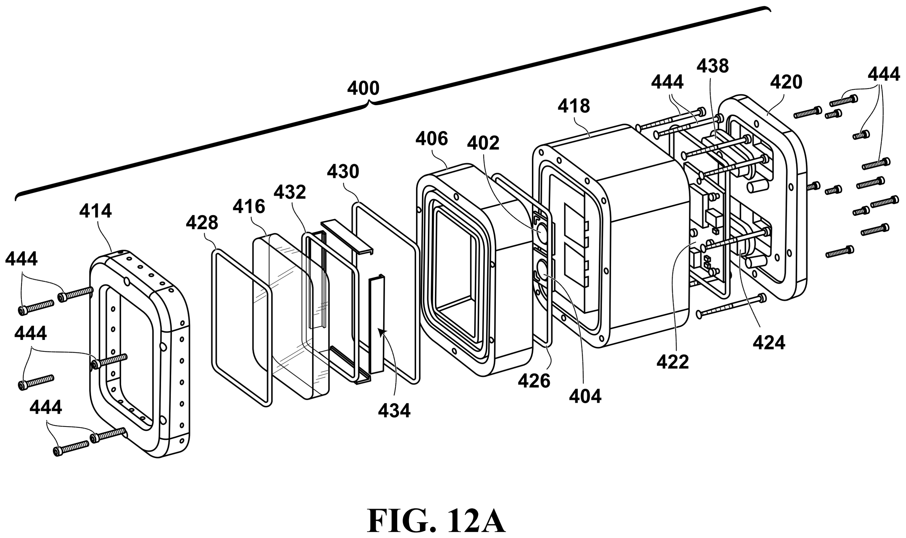

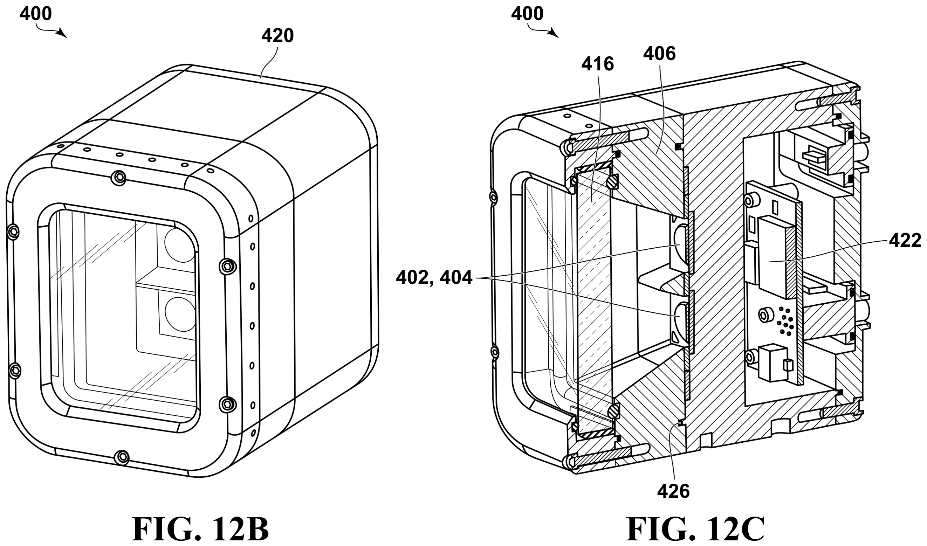

Referring to Figures 12A, 12B, and 12C, described therein is an illumination system 400, in accordance with an embodiment.

The illumination system 400 includes a first light emitting diode (LED) that emits a first light. The illumination system 400 includes a second LED 404 that emits a second light.

The illumination system 400 includes a reflector 406.

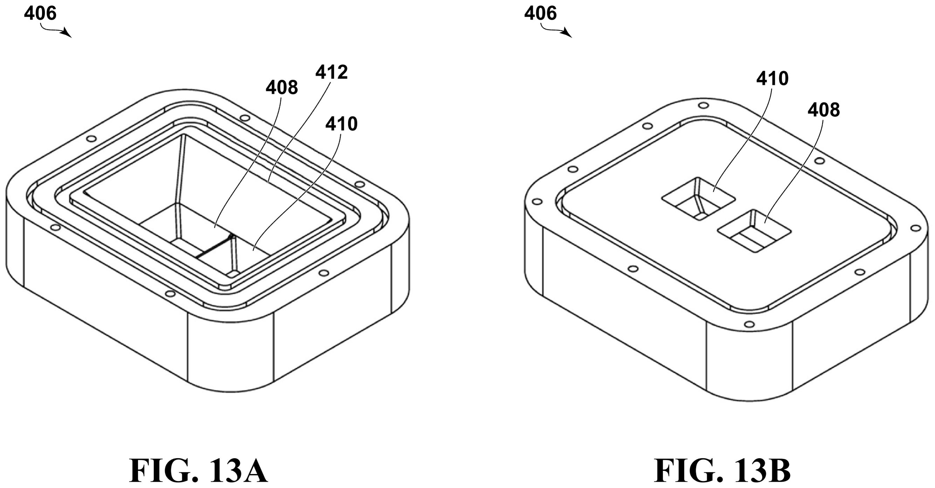

Referring to Figures 13A and 13B, which show the reflector 406. The reflector 406 includes a first stage reflector 408 for reflecting the first light. The illumination reflector 406 includes a further first stage reflector 410 for reflecting the second light. The reflector 406 includes a second stage reflector 412 for reflecting the first light and the second light (e.g., reflector 102 as described with reference to Figures 4A and 4B).

Referring again to Figures 12A, 12B, and 12C, the illumination system 400 includes an optical retainer 414 for retaining a window 416. The optical window 416 may protect the LEDs 402, 403 from radiation and dust (e.g., lunar dust). The optical window 416 may include abrasion resistant and/or indium tin oxide (ITO) coating to provide electromagnetic interference (EMI) and radiation protection.

The illumination system 400 includes an LED housing 418. The illumination system 400 includes a back cover 420.

The illumination system 400 may include a circuit card assembly (CCA) 422. The CCA 422 may be housed within the assembly and mounted onto the back cover 420. There may be connectors 424 that allow for external connections to provide power to the LEDs 402, 424 and to an internal heater 426 within the assembly.

The illumination system 400 includes two window sealing gaskets 428, 430 for sealing the window 416. The illumination system 400 includes an EMI gasket 432 for sealing the window 416 with a window holder 434 within the window retainer 414.

The illumination system 400 may be packaged in such a way to facilitate use in any one or more of space, zero gravity, or vacuum environments. The illumination system 400 may be packaged in a housing that protects against EMI, radiation, and heat/charge build up as may be important in a space environment.

The illumination system 400 includes another sealing gasket 436 that seals the LEDs 402, 404 within the LED housing 418.

The illumination system 400 may include a heater 426 that provides heat to the LEDs 402, 404. The heater 426 has a heater connector 438 that connects to the back cover 420.

The illumination system 400 includes a plurality of fasteners 444 (shown generally), that fasten the illumination system 400 together.

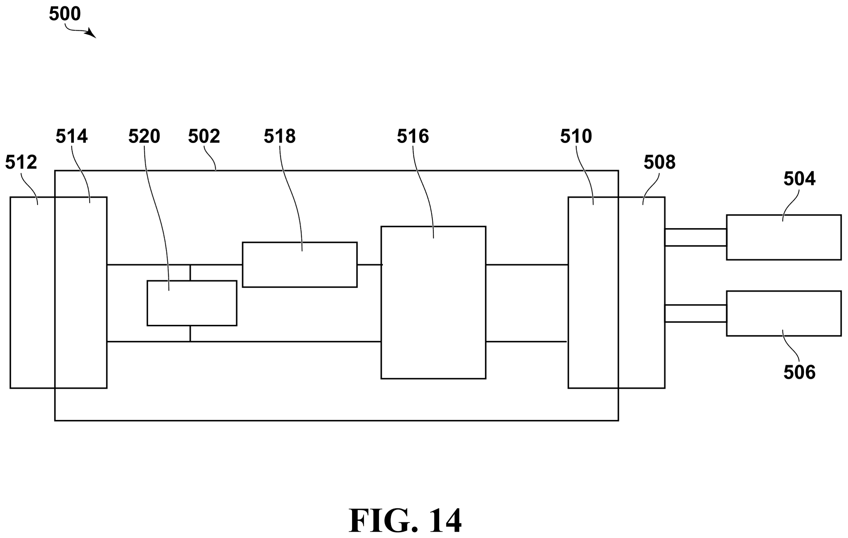

Referring to Figure 14, described therein is electrical system 500 of an illumination system, in accordance with an embodiment. The electrical system 500 may be for the illumination system 400 of Figures 12A, 12B, and 12C.

The electric system 500 may include a circuit card assembly (CCA) 502. The CCA 502 connects to and provides power to a first LED 504 and a second LED 506. The intensity of the LEDs 504, 506 may be adjusted based on the distance to the object.

The electrical system 500 includes a LED side connector 508 that removably connects with a CCA side connector 510 on the CCA 502. The electrical system 500 includes an external connector 512 that removably connects with a CCA side connector 514 on the CCA.

The electrical system 500 may have no active components and acts as protection and filtering for the electrical input to the LEDs 504, 506. The CCA 502 has a common mode choke in addition to other EMI/EMC filtering components 516. These are implemented to help the illumination system to pass EMI/EMC tests. The illumination system has a reverse polarity diode 418 selected for optimized low power consumption.

The CCA 502 includes a bi-directional transient-voltage-suppression (TVS) diode 520 located after the connector 514 to protect downstream components from potential ESD (electrostatic discharge) strikes. The CCA 502 may also have ESD capacitors alongside the TVS diode 520 as well series impedances to further mitigate any further ESD effects.

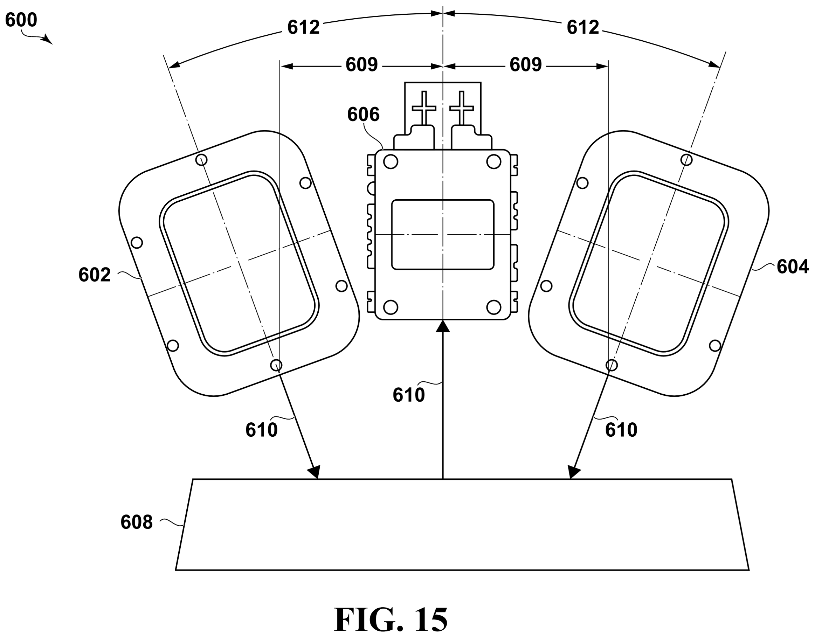

Referring to Figure 15, described therein is an illumination system 600, in accordance with an embodiment. The illumination system 600 includes a first illumination reflector 602 and a second illumination reflector 604. The illumination reflectors 602, 604 may be the illumination system 400 of Figures 12A, 12B, and 12C.

The illumination system 600 includes a camera 606 that captures an image of an object 608. The first and second illumination reflectors 602, 604 are on opposite sides of the inspection camera 606. The first and second illumination reflectors 602, 604 reflect light 610 onto the object 608. The light 610 reflects off of the object 608 and an image of the object 608 is captured by the camera 606.

The first and second illumination reflectors 602, 604 have LEDs that provide a desired amount of illumination intensity (LUX) at the object 608 for the camera 606 to take a detectable image.

The first and second illumination reflectors 602, 604 are positioned at a distance 609 from the center of the camera 606. The first and second illumination reflectors 602, 604 are positioned at an angle 612 from the center of the camera 606.

While the above description provides examples of one or more apparatus, methods, or systems, it will be appreciated that other apparatus, methods, or systems may be within the scope of the claims as interpreted by one of skill in the art.

## Claims

1. An illumination system, the system comprising:
an illumination reflector that reflects light into a field-of-view (FOV) of a camera system;
a light source that emits light;
an illumination reflector directs source illumination into the FOV of the camera system;
wherein the illumination reflector includes a first stage and a second stage;
wherein the first stage and the second stage reflect the light to produce an asymmetrical illumination.

2. The system of claim 1 further comprising:
a first light source that emits a first light; and
a second light source that emits a second light; and/or
wherein the first light source and the second light source are symmetrical.

3. The system of claim 2, wherein:
the illumination reflector includes the first stage reflector for reflecting the first light; and
the illumination reflector includes a further first stage reflector for reflecting the second light.

4. The system of claim 2, wherein the first stage reflectors reflect the widest angles emitted from the first and second light sources to deliver a bright central peak within the FOV; and/or
wherein the first stage reflectors have steep cone angles that have the light sources positioned close together.

5. The system of any one of claims 2 to 4, wherein the light sources include any one or more of a light emitting diode (LED), a light pipe, a fiber light, an arc lamp, an incandescent filament, and a Lambertian source of light.

6. The system of any one of claims 1 to 5, wherein first stage and the second stage include a rectangular cone with different angles along each axis.

7. The system of claim 1, wherein the light source is split in an optical path leading into the illuminator reflector.

8. The system of claim 1, wherein the second stage reflector is a single reflector that optimizes illumination uniformity and redirects source illumination that is outside the FOV towards the edges of the FOV; and/or
wherein the FOV of the camera system has an asymmetrical, widescreen aspect ratio.

9. The system of claim 1, wherein the illumination reflector adjustably alters the angle of reflection of the first stage and/or the second stage; and/or
wherein the illumination reflector adjustably alters the angle of reflection based on a trade-off between peak illuminance and uniformity.

10. The system of claim 1, wherein the illumination reflector has a coating to improve illumination;
wherein the coating includes a mirrored coating, a painted-on coating, or a white coating.

11. The system of claim 1, wherein the illumination system is mounted to a space station on or orbiting the Moon, the Earth, or another celestial body.

12. The system of claim 1 further comprising a heater that provides heat to the light sources.

13. The system of claim 1 further comprising an electrical system, the electrical system comprising:
a circuit card assembly that connects to and provides power to the light sources; and/or
wherein the circuit card assembly includes a bi-directional transient-voltage-suppression (TVS) diode to protect downstream components from potential electrostatic discharge strikes.

14. The system of claim 1 further comprising:
the camera system that captures an image of an object.

15. The system of claim 19 further comprising:
first and second illumination reflectors on opposite sides of the camera system;
wherein the first and second illumination reflectors reflect light onto the object;
wherein the light reflects off of the object and the image of the object is captured by the camera system.
